**Europäisches Patentamt**

**European Patent Office**

**Office européen des brevets**

(11) Numéro de publication : **0 429 332 B1**

(12)

# FASCICULE DE BREVET EUROPEEN

(45) Date de publication du fascicule du brevet :
**26.01.94 Bulletin 94/04**

(51) Int. Cl.⁵ : **G01M 11/02**

(21) Numéro de dépôt : **90403167.1**

(22) Date de dépôt : **07.11.90**

(54) **Procédé et dispositif pour la détermination des caractéristiques d'une lentille, et notamment, de sa puissance.**

(30) Priorité : **10.11.89 FR 8914782**

(43) Date de publication de la demande :
**29.05.91 Bulletin 91/22**

(45) Mention de la délivrance du brevet :
**26.01.94 Bulletin 94/04**

(84) Etats contractants désignés :
**DE ES GB IT**

(56) Documents cités :
**FR-A- 2 270 575
FR-A- 2 501 372
GB-A- 2 105 029
US-A- 4 275 964
US-A- 4 609 287
US-A- 4 826 315**

(73) Titulaire : **ESSILOR INTERNATIONAL, Cie
Générale d'Optique
1 Rue Thomas Edison, Echat 902
F-94028 Créteil Cédex (FR)**

(72) Inventeur : **Lippens, Xavier
145 Rue de Lourmel
F-75015 Paris (FR)**

(74) Mandataire : **CABINET BONNET-THIRION
95 Boulevard Beaumarchais
F-75003 Paris (FR)**

EP 0 429 332 B1

## Description

La présente invention concerne d'une manière générale la détermination de certaines au moins des caractéristiques optiques d'une lentille.

Elle vise plus particulièrement, mais non exclusivement, la détermination de la puissance focale d'une lentille ophtalmique.

Cette détermination se fait usuellement à l'aide d'un dispositif, ou instrument, communément appelé frontofocomètre.

La présente invention vise, plus particulièrement encore, le cas où un tel dispositif comporte, en pratique en amont de la lentille, des moyens d'émission propres à la formation d'une pluralité de faisceaux lumineux, et, en aval de celle-ci, un capteur de position photosensible apte à permettre le relevé de l'impact de ce faisceau lumineux dans un plan d'analyse perpendiculaire à l'axe de la lentille après traversée de celle-ci.

C'est le cas, par exemple, du dispositif décrit dans le brevet américain No 4.275.964, et c'est le cas, également, de l'un au moins de ceux décrits dans le brevet français qui, déposé le 7 Mai 1975 sous le No 75 14278, a été publié sous le No 2.270.575.

Dans le brevet américain No 4.275.964, les rayons lumineux mis en oeuvre sont tous répartis suivant un même cercle, et il doit ainsi être mis en oeuvre au moins cinq de tels rayons lumineux.

Il en résulte une certaine complexité pour les moyens de traitement à mettre par ailleurs en oeuvre pour l'exploitation des signaux délivrés par le capteur de position.

Dans le brevet français No 75 14278, et bien qu'il y soit prévu que trois rayons lumineux au moins soient à mettre en oeuvre, il est effectivement mis en oeuvre quatre de tels rayons lumineux, aux angles d'un carré, et lorsque, comme en l'espèce, ces rayons lumineux sont individualisés en amont de la lentille, avant traversée de celle-ci, deux mesures sont à effectuer, en faisant varier dans l'intervalle la distance entre la lentille et le capteur de position.

Comme précédemment, il en résulte une certaine complexité dans l'exploitation des signaux obtenus.

Dans le brevet américain No US-A-4.609.287, par ailleurs, il est indiqué qu'il est possible de déterminer les caractéristiques d'un système optique, qu'il s'agisse d'une lentille ophtalmique ou d'un oeil, avec un test objet composé d'au moins trois sources lumineuses régulièrement espacées sur un cercle centré sur l'axe optique de l'appareil.

Mais, en réalité, cette possibilité ne concerne que le cas simple d'un système optique n'ayant que des caractéristiques optiques cylindriques.

Dans le cas le plus général, qui consiste à déterminer les caractéristiques optiques d'un système optique comportant des caractéristiques optiques cylindriques et prismatiques, la mise en oeuvre de trois sources est insuffisante.

En effet, l'image observée est alors une ellipse, et, ainsi qu'on le sait, l'équation générale d'une ellipse comporte cinq coefficients.

Pour déterminer ces coefficients, cinq points sont nécessaires.

De fait, dans les exemples de réalisation pratique décrits dans ce brevet américain No US-A-4.609.287, il est mis en oeuvre, toutes disposées sur un même cercle, autour de l'axe optique de l'ensemble, cinq sources objets.

Comme précédemment, encore, il en résulte une certaine complexité dans l'exploitation des signaux obtenus.

La présente invention est fondée sur l'observation, non mise en évidence à ce jour, qu'il était avantageusement possible de simplifier cette exploitation en prenant en considération un rayon lumineux central.

Il s'avère en effet que quatre rayons lumineux suffisent alors à la mesure de puissance recherchée.

La présente invention a ainsi tout d'abord pour objet un procédé pour la détermination de l'une au moins des caractéristiques d'une lentille, du genre suivant lequel, s'agissant de la détermination de sa puissance focale, on fait traverser cette lentille par au moins trois rayons lumineux répartis suivant un cercle autour de l'axe de ladite lentille et on dispose en aval de ladite lentille un capteur de position photosensible apte à permettre le relevé des coordonnées de leurs impacts dans un plan d'analyse perpendiculaire à l'axe de la lentille, ce procédé étant d'une manière générale caractérisé en ce qu'on choisit, pour rayons lumineux, outre les trois rayons lumineux répartis suivant un cercle, un rayon lumineux passant par l'axe de la lentille ; elle a encore pour objet un dispositif propre à la mise en oeuvre d'un tel procédé.

Outre que, comme indiqué, la mise en oeuvre d'un rayon lumineux central permet de simplifier l'exploitation des signaux obtenus, elle permet, également, avantageusement, de déterminer, avant chaque mesure, le centre de coordonnées à prendre en considération, de centrer convenablement la lentille à étudier, par analyse de l'impact du rayon lumineux central après sa traversée, et d'avoir une mesure directe du prisme que peut présenter éventuellement cette lentille.

Elle se prête de surcroît avantageusement à divers développements permettant de mesurer, également, si désiré, la transmission optique de la lentille et/ou son indice de réfraction.

Les caractéristiques et avantages de l'invention ressortiront d'ailleur de la description qui va suivre, à titre d'exemple, en référence aux dessins schématiques annexés sur lesquels :

la figure 1 est un bloc diagramme représentatif d'un dispositif suivant l'invention ;

la figure 2 est une vue en perspective d'une forme de réalisation possible pour les moyens d'émission que comporte ce dispositif ;

la figure 3 est une vue en perspective se rapportant à une autre forme de réalisation possible pour ces moyens d'émission ;

la figure 4 est un schéma relatif au capteur de position que comporte le dispositif suivant l'invention et à l'unité de traitement susceptible d'être associée à ce capteur de position ;

la figure 5 est un schéma reprenant plus en détail ce capteur de position et une partie de l'unité de traitement susceptible de lui être associée ;

la figure 6 est un bloc diagramme relatif à un développement de l'invention propre à la mesure de l'indice de réfraction d'une lentille ;

la figure 7 est un tracé optique relatif au dispositif suivant l'invention ;

les figures 8A, 8B sont des diagrammes illustrant son mode d'intervention.

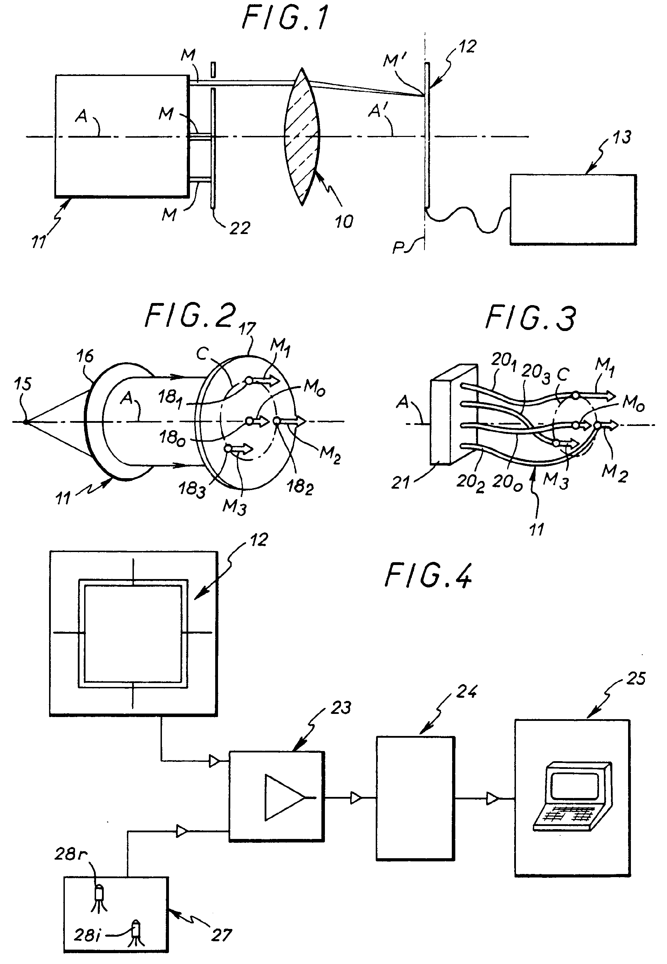

Tel qu'illustré sur la figure 1, il s'agit, globalement, de mesurer la puissance focale d'une lentille ophtalmique 10, et, par exemple, tel que représenté, d'une lentille ophtalmique convergente.

Il peut s'agir aussi bien d'une lentille ophtalmique uniquement sphérique que d'une lentille ophtalmique sphérocylindrique.

Globalement, le dispositif mis en oeuvre pour mesurer la puissance focale d'une telle lentille ophtalmique 10 comporte, en amont de cette lentille ophtalmique 10, des moyens d'émission 11 propres à la formation d'une pluralité de rayons lumineux M, et, en aval de celle-ci, un capteur de position 12 apte à permettre le relevé des coordonnées de leurs impacts M' dans un plan d'analyse P perpendiculaire à l'axe A de l'ensemble, ce plan d'analyse P étant par exemple formé par la face frontale d'un tel capteur de position 12.

Pour en faciliter la visualisation, les rayons lumineux M ont été représentés relativement épais sur les figures 1 à 3 et sur le diagramme de la figure 8A.

Mais il va de soi qu'ils peuvent au contraire être relativement ponctuels.

Quoi qu'il en soit, il est associé, au capteur de position 12, une unité de traitement 13 propre à l'exploitation des signaux qu'il délivre et, préférentiellement, à une exploitation automatique de ces signaux.

Suivant l'invention, et tel que schématisé par le diagramme de la figure 8A, les moyens d'émission 11 sont choisis de manière à être propres à la formation de trois rayons lumineux $M_1$, $M_2$, $M_3$ répartis suivant un même cercle C, par exemple à 135° deux à deux pour les rayons lumineux $M_1$, $M_3$, d'une part, et $M_2$, $M_3$, d'autre part, et à 90° l'un par rapport à l'autre pour les rayons lumineux $M_1$, $M_2$, tel que représenté, et d'un rayon lumineux $M_0$ central, c'est-à-dire d'un rayon lumineux passant par l'axe de l'ensemble.

Dans la forme de réalisation représentée sur la figure 2, les moyens d'émission 11 comportent une source lumineuse 15, un collimateur 16, et un écran 17 percé de trous 18, à raison d'un par rayon lumineux M.

Il y a ainsi un trou central $18_0$ donnant naissance à un rayon lumineux $M_0$, et, répartis suivant un cercle C autour de ce trou central $18_0$, trois trous $18_1$, $18_2$, $18_3$, donnant chacun respectivement naissance à des rayons lumineux $M_1$, $M_2$, $M_3$.

En variante, figure 3, les moyens d'émisssion 11 peuvent comporter un faisceau de quatre fibres optiques $20_0$, $20_1$, $20_2$, $20_3$, dont les extrémités, dûment munies d'une optique de collimation, telle que bille ou micro-lentille par exemple, sont réparties suivant la disposition recherchée, à savoir, comme indiqué ci-dessus, un cercle C, pour la formation des rayons lumineux $M_1$, $M_2$, $M_3$, et l'axe de l'ensemble pour la formation du rayon lumineux $M_0$ central.

Dans la forme de réalisation représentée, ces fibres optiques $20_0$, $20_1$, $20_2$, $20_3$ sont desservies par un boîtier de distribution de lumière 21 qui leur est commun.

Mais elles peuvent aussi bien être dotées chacune d'une source de lumière individuelle, telle que diode électroluminescente, laser ou lampe par exemple.

Quoi qu'il en soit, et tel que schématisé à la figure 1, le dispositif suivant l'invention comporte un cache 22 propre à ne laisser passer qu'un seul rayon lumineux M à la fois.

Dans la forme de réalisation représentée, ce cache 22 intervient en aval des moyens d'émission 11.

Il va de soi cependant que, dans le cas de l'utilisation de fibres optiques $20_0$, $20_1$, $20_2$, $20_3$ pour la constitution de ceux-ci, il peut intervenir au sein même de ces moyens d'émission 11, entre la source lumineuse desservant ces fibres optiques $20_0$, $20_1$, $20_2$, $20_3$ et l'entrée de celles-ci.

Il va de soi, également, que, en amont de la lentille ophtalmique 10 peut intervenir un système afocal de réduction propre à réduire les dimensions de la portion analysée de cette lentille ophtalmique 10.

Tel que schématisé à la figure 4, le capteur de position 12 est suivi par un étage de conversion courant tension et d'amplification 23, puis par un convertisseur analogique numérique 24, avant que les signaux qu'il délivre soient appliqués à des moyens informatiques de traitement 25.

De préférence, ce capteur de position 12 est un capteur apte à délivrer un signal proportionnel à l'intensité du rayon lumineux qu'il reçoit.

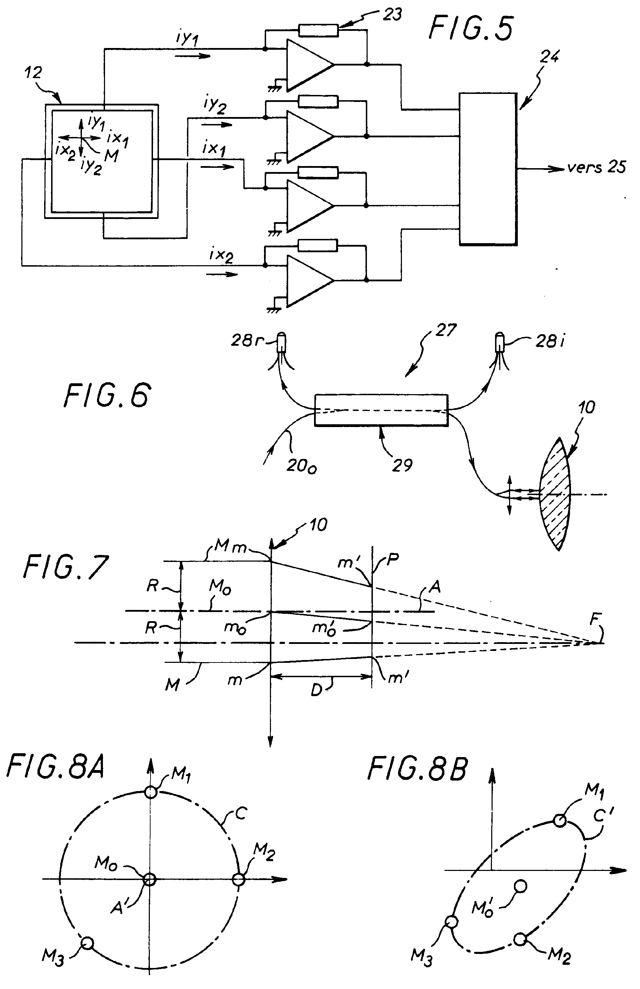

Il s'agit par exemple, tel que schématisé à la figure 5, d'une surface photosensible qui, en réponse à l'impact d'un rayon lumineux M, est apte à engendrer des courants électriques $ix_1$, $ix_2$, $iy_1$, $iy_2$ suivant chacune des quatre directions du plan, deux correspondant à l'axe des abscisses $\underline{x}$ et les deux autres à l'axe des ordonnées $\underline{y}$.

Les rapports entre les courants suivant, par exemple, les deux directions opposées de l'axe des

abscisses $\underline{x}$ permettent de connaître l'abscisse $\underline{x}$ du point d'impact du rayon lumineux M incident, et, de même, les rapports entre les courants suivant les deux directions opposées de l'axe des ordonnées $\underline{y}$ permettent de connaître l'ordonnée $\underline{y}$ de ce point d'impact.

Conjointement, l'intensité de chacun de ces courants est proportionnelle à l'intensité lumineuse.

L'étage de conversion courant tension et d'amplication 23 comporte autant de constituants que de directions du plan.

Il en est de même pour le convertisseur analogique numérique 24 et pour les moyens informatiques de traitement 25.

De préférence, pour la détermination de l'indice de réfraction de la lentille ophtalmique 10, il est en outre associé, au rayon lumineux central $M_o$ des moyens d'émission 11, des moyens 27 propres à récupérer le rayon réfléchi sur la lentille ophtalmique 10 et à l'envoyer sur un détecteur 28r apte à délivrer un signal lié à son intensité lumineuse.

De préférence, également, les moyens d'émission 11 sont alors des moyens d'émission à fibres optiques.

C'est donc la fibre optique centrale $20_o$ qui est utilisée, en coopération avec un coupleur en X 29, permettant, d'une part, de diriger la moitié de l'intensité qu'elle véhicule vers un détecteur 28i, et, d'autre part, de récupérer le rayon lumineux réfléchi et d'en diriger la moitié de l'intensité vers le détecteur 28r.

Tel que schématisé à la figure 4, les détecteurs 28r et 28i interviennent en amont de l'étage de conversion courant tension et d'amplification 23, en parallèle avec le capteur de position 12.

Soit A' l'axe de la lentille ophtalmique 10 dont les caractéristiques sont à mesurer.

Sur la figure 1, cet axe A' a été supposé confondu avec l'axe A des moyens d'émission 11 et du capteur de position 12.

Il n'en est pas de même, pour plus de généralité, sur le tracé optique de la figure 7.

Le rayon lumineux central $M_o$ frappe la lentille en un point $m_o$, et, après traversée de celle-ci, il est dévié vers son foyer F.

Il frappe alors le plan d'analyse P en un point $m'_o$, projection du point $m_o$ précédent.

Le calcul permet de déterminer les coordonnées $x'_o$, $y'_o$ du point $m'_o$ en fonction de celles $x_o$, $y_o$ du point $m_o$, de la distance D entre le plan moyen de la lentille ophtalmique 10 et le plan d'analyse P, et du décentrement de l'axe A' de cette lentille ophtalmique 10 par rapport à l'axe A de l'ensemble du dispositif.

Les symétries se conservant, le lieu des points m' projection des points $\underline{m}$ appartenant à un cercle C de rayon R centré sur l'axe A de l'ensemble, et donc sur le point $m_o$, est une courbe centrée sur le point $m'_o$ projection de ce point $m_o$.

Si la lentille ophtalmique 10 est une lentille purement sphérique, cette courbe est un cercle.

S'il s'agit, comme en l'espèce, d'une lentille sphérocylindrique, cette courbe est, tel que schématisé à la figure 8B, une ellipse C'.

L'équation de cette ellipse C' peut se mettre sous la forme :

$$A[x^2 - 2x\,x'_o] + B[xy - xy'_o - x'_o\,y] + C[y^2 - 2y\,y'_o] + F = 0 \ (I)$$

La connaissance des coordonnées de trois points appartenant à cette ellipse, en l'espèce les points $M'_1$, $M'_2$, $M'_3$ projections des points matérialisés par les rayons lumineux $M_1$, $M_2$, $M_3$, ainsi que celle des coordonnées de son centre $M'_o$ projection du point matérialisé par le rayon lumineux central $M_o$, permet, en les reportant dans l'équation I ci-dessus, d'obtenir un système de trois équations permettant, à leur tour, de déterminer les coefficients A, B, C et F de cette équation I.

L'ellipse C' est dès lors complètement connue.

Le calcul montre qu'il est possible dès lors de déterminer la puissance focale de la lentille ophtalmique 10 en fonction du grand axe et du petit axe de cette ellipse.

Lorsque, comme en l'espèce, l'ellipse est inclinée, son angle d'inclinaison permet également de déterminer l'angle du cylindre de cette lentille ophtalmique 10.

Son décentrement permet de déterminer par ailleurs la valeur prismatique de celle-ci.

Corollairement, l'indice de réfraction $\underline{n}$ de la lentille ophtalmique 10 est obtenu, par le coefficient de réflectance, c'est-à-dire par le rapport Re entre l'intensité Ir du rayon lumineux réfléchi et celle Ii du rayon lumineux incident, telles que relevées à l'aide des détecteurs 28r et 28i.

$$Re = \frac{Ir}{Ii} = \left[\frac{n-1}{n+1}\right]^2$$

La transmission optique de la lentille ophtalmique 10, enfin, est obtenue par le rapport entre les flux lumineux relevés avec et sans cette lentille ophtalmique 10.

Bien entendu, la présente invention ne se limite pas à la forme de réalisation et/ou à la forme de mise en oeuvre décrites et représentées, mais englobe toute variante d'exécution.

**Revendications**

1.  Procédé pour la détermination de l'une au moins des caractéristiques d'une lentille (10) du genre suivant lequel, s'agissant de la détermination de sa puissance focale, on fait traverser ladite lentille (10) par au moins trois rayons lumineux ($M_1$,

$M_2$, $M_3$) répartis suivant un cercle (C) autour de l'axe (A) de la lentille (10) et on dispose en aval de ladite lentille (10) un capteur de position photosensible (12) apte à permettre le relevé des coordonnées de leurs impacts dans un plan d'analyse (P) perpendiculaire à l'axe de la lentille (10), caractérisé en ce qu'on choisit, pour rayons lumineux (M), outre les trois rayons lumineux répartis suivant le cercle (C), un rayon lumineux passant par l'axe (A) de la lentille (10).

2. Dispositif pour la détermination des caractéristiques d'une lentille du genre comportant des moyens d'émission (11) propres à la formation d'au moins trois rayons lumineux ($M_1$, $M_2$, $M_3$) répartis suivant un cercle (C) autour de l'axe (A) de la lentille (10) et un capteur de position photosensible (12) apte à permettre le relevé des coordonnées de leurs impacts dans un plan d'analyse (P) perpendiculaire à l'axe (A) de l'ensemble, caractérisé en ce que, pour mise en oeuvre d'un procédé conforme à la revendication 1, des moyens d'émission (11) sont propres à la formation, outre des trois rayons lumineux ($M_1$, $M_2$, $M_3$) répartis suivant le cercle (C), d'un rayon lumineux ($M_o$) passant par l'axe (A) de la lentille (10).

3. Dispositif suivant la revendication 2, caractérisé en ce qu'il comporte un cache (22) propre à ne laisser passer qu'un seul rayon lumineux (M) à la fois.

4. Dispositif suivant l'une quelconque des revendications 2, 3, caractérisé en ce que le capteur de position photosensible (12) est apte à engendrer des courants électriques ($ix_1$, $ix_2$, $iy_1$, $iy_2$) suivant chacune des quatre directions du plan, deux correspondant à l'axe des abscisses ($\underline{x}$) et les deux autres à l'axe des ordonnées ($\underline{y}$).

5. Dispositif suivant l'une quelconque des revendications 2 à 4, caractérisé en ce que, pour la détermination de la transmission optique de la lentille (10), le capteur de position photosensible (12) est un capteur apte à délivrer un signal proportionnel à l'intensité du rayon lumineux qu'il reçoit.

6. Dispositif suivant l'une quelconque des revendications 2 à 5, caractérisé en ce que, pour la détermination de l'indice de réfraction de la lentille (10), il est associé, au rayon lumineux central ($M_o$) de ses moyens d'émission (11), des moyens (27) propres à récupérer le rayon réfléchi sur la lentille (10) et à l'envoyer sur un détecteur (28r) apte à délivrer un signal lié à son intensité lumineuse.

**Patentansprüche**

1. Verfahren zur Bestimmung von zumindest einem der Merkmale einer Linse (10), derart, daß, wenn es sich um die Bestimmung ihrer Brechkraft handelt, man durch diese Linse (10) zumindest drei Lichtstrahlen ($M_1$, $M_2$, $M_3$) schickt, die gemäß einem Kreis (C) um die Achse (A) der Linse (10) verteilt sind, und man hinter der Linse (10) einen strahlungsempfindlichen Positionsfühler (12) anordnet, der geeignet ist, die Ermittlung der Koordinaten ihres Auftreffens in einer Analysenebene (P) zu ermoglichen, die senkrecht zur Achse der Linse (10) liegt, dadurch gekennzeichnet, daß man als Lichtstrahlen (M), außer den gemäß einem Kreis (C) verteilten drei Lichtstrahlen, einen Lichtstrahl wählt, der durch die Achse (A) der Linse (10) läuft.

2. Vorrichtung zur Bestimmung der Merkmale einer Linse, derart, daß sie Aussendemittel (11) zur Bildung von zumindest drei Lichtstrahlen ($M_1$, $M_2$, $M_3$) aufweist, die gemäß einem Kreis (C) um die Achse (A) der Linse (10) verteilt sind, und einen Positionsfühler (12), der geeignet ist, die Ermittlung der Koordinaten ihres Auftreffens in einer Analysenebene (P), die senkrecht zur Achse (A) des Ganzen liegt, zu ermöglichen, dadurch gekennzeichnet, daß zum Einsatz eines Verfahrens gemäß Anspruch 1 die Aussendemittel (11) geeignet sind, außer den drei Lichtstrahlen ($M_1$, $M_2$, $M_3$), die gemäß einem Kreis (C) verteilt sind, den Lichtstrahl ($M_o$), der durch die Achse (A) der Linse (10) lauft, zu bilden.

3. Vorrichtung gemäß Anspruch 2, dadurch gekennzeichnet, daß sie eine Abdeckung (22) aufweist, die nur einen einzigen Lichtstrahl (M) zur Zeit durchläßt.

4. Vorrichtung gemäß irgendeinem der Ansprüche 2, 3, dadurch gekennzeichnet, daß der Positionsfühler (12) dazu geeignet ist, elektrische Ströme ($ix_1$, $ix_2$, $iy_1$, $iy_2$) gemäß jeder der vier Richtungen der Ebene zu erzeugen, und zwar zwei entsprechend der Abszissenachse ($\underline{x}$) und die anderen beiden entsprechend der Ordinatenachse ($\underline{y}$)

5. Vorrichtung gemäß irgendeinem der Ansprüche 2 bis 4, dadurch gekennzeichnet, daß der strahlenempfindliche Positionsfühler (12) zur Bestimmung der optischen Transmission der Linse (10) ein Fühler ist, der geeignet ist, ein Signal proportional zur Intensitat des Lichtstrahles, den er empfängt, zu liefern.

6. Vorrichtung gemäß irgendeinem der Ansprüche 2 bis 5, dadurch gekennzeichnet, daß zur Bestimmung des Brechungsindex der Linse (10) an dem zentralen Lichtstrahl ($M_o$) seiner Aussendemittel (11) Mittel (27) angeschlossen sind, die dazu geeignet sind, den auf der Linse (10) reflektierten Strahl einzufangen und ihn zu einem Detektor (28r) zu senden, der geeignet ist, ein Signal, das an seine Lichtintensität gebunden ist, zu liefern.

## Claims

1. Method for the determination of at least one of the characteristics of a lens (10) of the type according to which, with regard to the determination of focal power, at least three beams of light ($M_1$, $M_2$, $M_3$) are passed through said lens, said beams of light being distributed in a circle (C) about the axis (A) of the lens (10), and after said lens (10) is positioned a photosensitive position sensor (12) which is able to permit the determination of the coordinates of their impacts on an analysis plane (P) perpendicular to the axis of the lens (10), characterised in that for beams of light (M), other than the three beams of light distributed in a circle (C), a beam of light passing through the axis (A) of the lens (10) is selected.

2. Device for the determination of the characteristics of a lens of the type comprising emission means (11) suitable for the formation of at least three beams of light ($M_1$, $M_2$, $M_3$) distributed in a circle (C) about the axis (A) of the lens (10) and a photosensitive position sensor (12) which is able to determine the coordinates of their impacts on an analysis plane (P) perpendicular to the axis (A) of the unit, characterised in that for the implementation of a method according to claim 1, the emission means (11) are suitable for the formation, in addition to the three beams of light ($M_1$, $M_2$, $M_3$) distributed in a circle (C), of a beam of light ($M_o$) which passes through the axis (A) of the lens (10).

3. Device according to claim 2, characterised in that it comprises a mask (22) suitable for allowing only one beam of light (M) to pass at a time.

4. Device according to any one of claims 2, 3, characterised in that the photosensitive position sensor (12) is suitable for generating electric currents ($ix_1$, $ix_2$, $iy_1$, $iy_2$) according to each of the four directions of the plane, two corresponding to the X-axis ($\underline{x}$) and the two others to the Y-axis ($\underline{y}$).

5. Device according to any one of claims 2 to 4, characterised in that for the determination of the optical transmission of the lens (10), the photosensitive position sensor (12) is a sensor suitable for delivering a signal proportional to the intensity of the beam of light which it receives.

6. Device according to any one of claims 2 to 5, characterised in that for the determination of the refraction index of the lens (10), it is associated with the central beam of light ($M_o$) of its emission means (11), with means (27) suitable for the recovery of the beam reflected on the lens (10) and for sending it to a detector (28r) suitable for delivering a signal according to its light intensity.

EP 0 429 332 B1

FIG.1

FIG.2

FIG.3

FIG.4

7

FIG.5

FIG.6

FIG.7

FIG.8A

FIG.8B